# FASCICULE DE BREVET EUROPEEN

(11) **EP 1 791 715 B1**
(45) Date de publication et mention de la délivrance du brevet: **10.11.2010**
(21) Numéro de dépôt: 05798952.7
(22) Date de dépôt: 06.09.2005
(51) Int. Cl.: B60K 31/04, B60W 30/18, F16H 61/20

(54) **PROCEDE DE COMMANDE A PLUSIEURS MODES DE FONCTIONNEMENT D'UNE TRANSMISSION AUTOMATISEE POUR UN VEHICULE AUTOMOBILE, NOTAMMENT POUR UN AVANCEMENT AU RALENTI DU VEHICULE AUTOMOBILE AVEC FREIN ACTIVE ET DISPOSITIF CORRESPONDANT**
VERFAHREN ZUR STEUERUNG DES MEHRBETRIEBSMODUS EINES AUTOMATIKGETRIEBES FÜR EIN KRAFTFAHRZEUG, IM BESONDEREN FÜR LEERLAUFBETRIEB MIT ANGEZOGENER BREMSE UND DAZUGEHÖRIGE VORRICHTUNG
METHOD FOR MULTI-OPERATING MODE CONTROL OF AN AUTOMATED TRANSMISSION FOR A MOTOR VEHICLE, IN PARTICULAR FOR IDLE SPEED RUNNING WITH ACTIVATED BRAKE AND CORRESPONDING DEVICE

(30) Priorité: 10.09.2004 FR 0409649
(43) Date de publication de la demande: 06.06.2007
(73) Titulaire: RENAULT S.A.S., 92100 Boulogne Billancourt (FR)
(72) Inventeur: ROUDEAU, Frédéric, F-94400 VITRY SUR SEINE (FR); BRETHEAU, Jean, F-92160 ANTONY (FR); VERMUSE, Vincent, F-91180 ST GERMAIN LES ARPAJON (FR)
(86) Numéro de dépôt international: PCT/FR2005/050712
(87) Numéro de publication internationale: WO 2006/030146

(56) Documents cités:
- EP-A- 1 241 064
- EP-A- 1 275 551
- US-A1- 2004 143 384
- US-B1- 6 346 064
- US-B1- 6 358 182

## Description

La présente invention concerne le contrôle du mode de fonctionnement d'un groupe motopropulseur équipé d'une transmission automatisée d'un véhicule automobile.

Ce dispositif de contrôle s'applique avantageusement à des transmissions automatisées notamment les Boîtes à Commande Impulsionnelle dites BCI, les Boîtes à Commande Automatique dites BVA et les Boîtes de Vitesses Robotisées dites BVR, mais aussi les transmissions à rapport continu, telles que les CVT (« Continuous Variable Transmission » en langue anglaise), les IVT (« Infinitely Variable Transmission » en langue anglaise) et les transmissions hybrides.

Une transmission comporte classiquement un bloc de commande recevant un ou plusieurs paramètres d'entrée interprétant la volonté du conducteur. Puis, en fonction de la valeur de ces paramètres, ce bloc de commande délivre une consigne de commande en vue d'une application aux roues du véhicule automobile.

Une évolution d'un tel bloc de commande a déjà été décrite dans le document FR-A-2827339, au nom de la Demanderesse. Ce document détaille un dispositif de contrôle du point de fonctionnement d'un groupe motopropulseur. Le contrôle réalisé par ce dispositif est un contrôle en couple appliqué aux roues du véhicule automobile. Tel que définie dans le document FR-A-2827339, la valeur du couple à appliquer aux roues du véhicule automobile, est calculée directement au niveau des roues du véhicule automobile.

Le dispositif du document FR-A-2827339 possède un module d'interprétation de la volonté du conducteur appelé module IVC.

Le module IVC génère une consigne de couple à appliquer aux roues, à destination d'un bloc d'optimisation du point de fonctionnement OPF. Ce dernier transmet ledit couple en vue d'un contrôle en couple à appliquer aux roues du véhicule automobile. Le bloc OPF génère simultanément une consigne de régime moteur à partir dudit couple à appliquer aux roues du véhicule automobile. On détermine cette consigne de couple en fonction de la volonté du conducteur, des caractéristiques du véhicule automobile et de son environnement.

Cependant, dans le cas d'une transmission automatisée, il existe des modes spécifiques tels que le mode « Rampage » et le mode « Neutre », liés à la transmission automatisée et que l'on ne retrouve pas dans le cas d'une transmission mécanique. Le mode « Rampage » correspond à un avancement au ralenti du véhicule automobile, lorsque le levier de vitesse est en position dite « Drive » ou « D ». Le mode « Neutre » correspond à un avancement en roue libre du véhicule automobile lorsque le levier de commande est en position dite « Neutre » ou « N ».

Le module d'interprétation de la volonté du conducteur du document FR-A-2827339 ne prend pas en compte ces modes de fonctionnement particulier, notamment dans le cas où le véhicule automobile avance au pas en ayant des contraintes de charge ou de pente par exemple. Dans cette configuration, le véhicule automobile doit également vaincre des efforts de traînée, c'est-à-dire un couple de frottements des pièces de l'ensemble des pièces de la chaîne de transmission. Ces efforts de traînée augmentent sensiblement la consommation en carburant du véhicule automobile, notamment lorsque celui-ci est à l'arrêt.

On connaît pour ce mode de fonctionnement, par le document US 5,549,525 (ZF), un dispositif qui empêche le véhicule automobile de reculer lorsqu'il avance au pas sur un plan incliné. Pour ce faire, le dispositif prévoit un contrôle mais uniquement au niveau de la transmission.

On connaît également par le document FR 2,806,670 au nom de la Demanderesse un dispositif de commande pour réduire la traînée d'une boîte automatique à convertisseur de couple, lorsque le véhicule automobile est à l'arrêt. La solution technique apportée par ce dispositif consiste à débrayer automatiquement à l'arrêt afin de réduire le hombre de pièces à entraîner et de ce fait la consommation en carburant.

La demande de brevet européen (EP 1 241 064) a pour objet de simplifier la conduite d'un véhicule entrant en stationnement, notamment de limiter les manipulations des pédales d'accélérateur et de freinage ([0004] et [0005]). La demande de brevet européen (EP 1 241 064) ne divulgue une détermination du mode de rampage ou de la consigne délivrée en fonction d'un signal représentatif d'une composante dynamique de la consigne en cours d'application. Ainsi, la demande de brevet européen (EP 1 241 064) ne s'intéresse pas à limiter les brusques variations de couple pouvant intervenir lors de l'entrée en stationnement.

La présente invention a pour but de pallier les manques des différentes solutions décrites dans les demandes précitées afin de répondre au plus près à la volonté du conducteur, en particulier lorsque le véhicule automobile se trouve en mode « Rampage ». L'invention a également pour but de permettre le passage d'un mode de fonctionnement à un autre, tout en évitant le phénomène d'oscillations de mode, c'est-à-dire l'alternance rapide d'un mode à un autre du fait de l'oscillation d'un paramètre autour d'une valeur de seuil.

À cet effet, l'invention propose un procédé de commande d'une transmission automatisée d'un groupe motopropulseur pour un véhicule automobile, comprenant une étape d'élaboration d'un signal de consigne d'une variable à appliquer aux roues du véhicule automobile, ladite consigne comprenant une composante dynamique et une composante statique élaborées en tenant compte de données d'entrée représentatives des caractéristiques du véhicule automobile, de la volonté du conducteur et de l'environnement du véhicule automobile. On sélectionne, en fonction desdites données d'entrée, un mode parmi au moins deux modes de fonctionnement différents, capables de délivrer ledit signal de consigne, l'un des deux modes de fonctionnement correspondant à un mode dit « Rampage en Couple » apte à délivrer ledit signal de consigne lorsque le véhicule automobile avance à une vitesse inférieure à un seuil prédéterminé et que la pédale de frein du véhicule automobile est activée, le mode « Rampage en Couple » et/ou la valeur de la consigne délivrée lorsque ledit mode « Rampage en Couple » est sélectionné, peuvent être déterminés en fonction d'un signal représentatif de la composante dynamique de la consigne en cours d'application.

Le mode dit « Rampage en Couple » permet d'offrir un mode de conduite approprié au déplacement du véhicule automobile à très basse vitesse et au ralenti, lorsque le conducteur active la pédale de frein. Ce mode de conduite va permettre notamment de réduire les efforts de traînée, de la boîte de transmission, particulièrement importants à l'arrêt du véhicule automobile. En réduisant ces efforts on diminue par conséquent la consommation en carburant du véhicule automobile.

Selon un mode de mise en oeuvre, le mode «Rampage en Couplé » et/ou la valeur de la consigne délivrée lorsque ledit mode « Rampage en Couple » est sélectionné, sont déterminés en fonction d'un signal représentatif de l'ensemble des couples résistants appliqués au véhicule automobile, mesurés au niveau de la roue du véhicule automobile et représentatifs de la charge embarquée par le véhicule automobile et/ou des dénivellations du profil routier.

Selon un mode de mise en oeuvre, le mode « Rampage en Couple » et/ou la valeur de la consigne délivrée lorsque ledit mode « Rampage en Couple » est sélectionné, sont déterminés en fonction d'un signal représentatif des couples résistants (Cres) mesurés ou estimés à la roue et que le véhicule automobile doit vaincre pour pouvoir se mettre en mouvement.

L'invention propose également un dispositif de commande d'une transmission automatisée d'un groupe motopropulseur pour un véhicule automobile, apte à délivrer des signaux de consigne d'une variable à appliquer aux roues du véhicule automobile, ladite consigne comprenant une composante dynamique et une composante statique élaborées en tenant compte de données d'entrée, délivrées par un bloc d'entrée et comprenant une liste de paramètres définissant les caractéristiques du véhicule automobile, la volonté du conducteur et l'environnement du véhicule automobile. Le dispositif comprend :
- un bloc de commande comportant au moins deux modules selon deux modes de fonctionnement distincts et prédéterminés, l'un des modules correspondant à un mode dit « Rampage en Couple, sélectionné lorsque le véhicule automobile avance à une vitesse inférieure à un seuil prédéterminé, que la pédale d'accélération est inférieure à un autre seuil prédéterminé et que la pédale de frein du véhicule automobile est activée,
- un module de sélection recevant les signaux provenant dudit bloc d'entrée et apte à délivrer un signal de sélection d'un module de mode de fonctionnement en fonction des données d'entrée, un module correspondant au mode dit «Rampage en Couple » peut être apte à déterminer la valeur de la consigne délivrée lorsque ledit mode «Rampage en Couple » est sélectionné, en fonction de la composante dynamique de la consigne en cours d'application.

Selon un mode de réalisation, le module destiné au mode de fonctionnement dit « Rampage en Couple » comprend :
- un premier bloc apte à élaborer une composante dynamique brute de la consigne en fonction d'une liste de paramètre prédéterminée,
- un filtre temporel capable de retarder la variable qu'il reçoit en entrée,
- un deuxième bloc apte à élaborer une variable de validation pour activer le filtre temporel, lorsqu'un signal indiquant l'entrée dans le mode « Rampage en Couple » passe de la valeur « 0 » à la valeur « 1 »,
- un troisième bloc apte à élaborer une variable d'état indiquant si l'on se trouve dans une phase dite de « réduction de traînée à l'arrêt », en fonction de la première liste de paramètres prédéterminée,
- un quatrième bloc apte à calculer un coefficient de modulation à partir de la variable d'état, afin d'appliquer progressivement la correction apportée lors de ladite phase de « réduction de traînée à l'arrêt »,
- des moyens pour effectuer des opérations sur les variables délivrées par les blocs compris dans le module destiné au mode de fonctionnement dit « Rampage en Couple » en fonction d'une troisième liste de paramètres d'entrée prédéterminés,
- un moyen de retard pour retarder la composante dynamique de la consigne en cours d'application,
- des moyens pour mémoriser des paramètres calibrables,
- des moyens pour comparer la composante dynamique, la valeur d'une composante statique brute et une quantité minimale de couple applicable à la roue, avec un signal représentatif des couples résistants appliqués à la roue et que le véhicule automobile doit vaincre pour pouvoir se mettre en mouvement.

Selon un mode de réalisation, la liste de paramètres prédéterminés comprend la vitesse du véhicule automobile et un signal représentatif de l'ensemble des couples résistants appliqués au véhicule automobile, mesurés ou estimés au niveau de la roue du véhicule automobile et représentatifs de la charge embarquée par le véhicule automobile et/ou des dénivellations du profil routier.

D'autres avantages et caractéristiques de l'invention apparaîtront à l'examen de la description détaillée d'un mode de mise en oeuvre de l'invention nullement limitatif, et des dessins annexés, sur lesquels :
- la figure 1 illustre schématiquement un exemple de réalisation d'un dispositif selon l'invention,
- la figure 2 illustre schématiquement et plus en détail une partie de la figure 1,
- la figure 3 illustre schématiquement et plus en détail une partie de la figure 1,
- la figure 4 illustre un exemple des différentes étapes lors de la sélection d'un mode de fonctionnement.
- La figure 5 illustre plus en détail un module de l'exemple de réalisation représenté sur la figure 1,
- Les figures 6 à 8 représentent des chronogrammes liés à un fonctionnement du module représenté sur la figure 5.

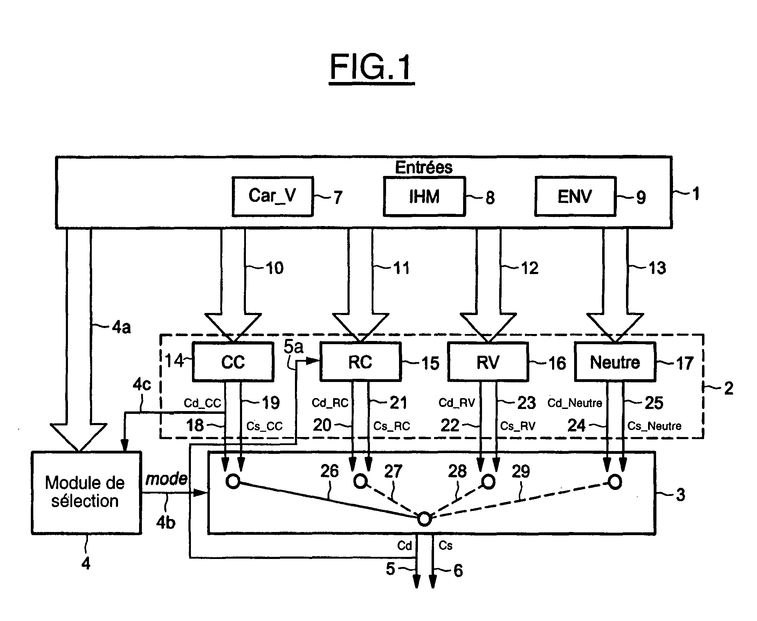

Sur la figure 1, on a représenté schématiquement un exemple d'un mode de réalisation du dispositif selon l'invention. Ce dispositif peut être inclus dans une boîte de commande pour une transmission automatisée de véhicule automobile, non représentée sur la figure.

Tel qu'il est illustré sur la figure 1, le dispositif de commande comprend un bloc d'entrée 1 transmettant des données à un bloc de commande 2. Ce dernier délivre différentes consignes selon chaque mode de fonctionnement à un sélecteur 3. Un module de sélection 4 envoie, en fonction des données d'entrée délivrées par le bloc d'entrée 1 par la connexion 4a, un signal de commande « *mode* » au sélecteur 3 par la connexion 4b. Le sélecteur 3 sélectionne, parmi les différentes consignes délivrées par le bloc de commande 2, la consigne adaptée au signal de commande « *mode* » et délivre le signal consigne. Ce signal comprend deux composantes, l'une statique Cs qui transite par la connexion 6 et l'autre dynamique Cd qui transite par la connexion 5.

La composante statique Cs dans l'exemple illustré, est la valeur maximale du couple applicable aux roues du véhicule automobile que pourrait demander le conducteur et que le groupe moto-propulseur doit rendre immédiatement disponible aux roues du véhicule automobile.

Dans d'autres variantes, les grandeurs élaborées par le dispositif peuvent être un effort ou une puissance.

Le bloc d'entrée 1 comprend trois modules 7, 8 et 9 qui vont élaborer un signal de données à partir des signaux issus de capteurs, non représentés, intégrés dans le véhicule automobile.

Le module 7 est capable d'élaborer les données concernant les caractéristiques du véhicule automobile. Celles-ci sont programmées et mémorisées par le constructeur pour caractériser le comportement du véhicule livré à un client.

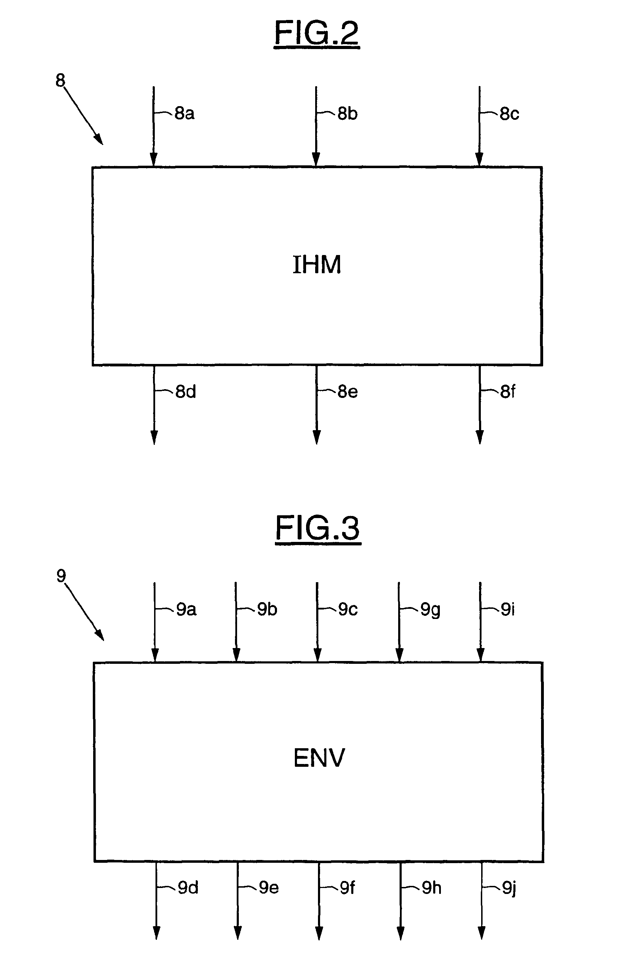

Le module 8 est capable d'élaborer des données concernant la volonté du conducteur (interface homme/machine, IHM). Ces données interprètent les souhaits que transmet le conducteur. En se référant à la figure 2 qui décrit plus précisément les données élaborées par le module 8, on note qu'il délivre des signaux tels qu'un signal transitant par la connexion 8d correspondant au levier de commande de la transmission du véhicule automobile transitant par la connexion 8a, un signal transitant par la connexion 8e correspondant au frein du véhicule automobile 8b, ou encore un signal transitant par la connexion 8f représentatif de l'enfoncement de la pédale d'accélération du véhicule automobile 8c.

Le module 9 est capable d'élaborer des signaux concernant l'environnement du véhicule automobile. Ces derniers permettent de tenir compte de l'état du véhicule automobile et de sa situation dans l'environnement. En se référant à la figure 3 qui décrit plus précisément les données élaborées par le module 9, on note qu'il délivre des signaux tels qu'un signal transitant par la connexion 9d correspondant à la vitesse du véhicule automobile 9a, un signal transitant par la connexion 9e, représentatif de l'état de la chaussée 9b, un signal transitant par la connexion 9f et représentatif des conditions météorologiques 9c, un signal transitant par la connexion 9h et représentatif des couples résistants 9g appliqués à la roue que le véhicule doit vaincre pour pouvoir se mettre en mouvement ou encore un signal transitant par la connexion 9j et correspondant à l'ensemble des couples résistants 9i appliqués au véhicule automobile, mesurés au niveau de la roue du véhicule automobile et représentatifs de la charge embarquée par le véhicule automobile et/ou des dénivellations du profil routier.

La valeur des paramètres et l'état des variables des données d'entrée transmises par ces trois modules sont stockés dans une mémoire commune à chaque élément du dispositif, non représentée.

Le bloc de commande 2 possède quatre modules distincts chacun correspondant à un mode de fonctionnement particulier du véhicule automobile. Ces blocs de commandes reçoivent toutes les données d'entrées du bloc d'entrée 1 par quatre connexions distinctes respectivement la connexion 10 pour le premier module 14 du bloc de commande 2, la connexion 11 pour le deuxième module 15, la connexion 12 pour le troisième module 16 et la connexion 13 pour le quatrième module 17.

Les quatre modules du bloc de commande 2 sont capables de délivrer un signal de consigne selon quatre modes différents que sont le mode « Contrôle Continu », le mode « Rampage en Vitesse », le mode « Rampage en Couple » et le mode « Neutre ».

En fonction des valeurs des paramètres d'entrée, on se retrouve dans une première configuration représentée sur la figure 1. Le mode choisi par le module de sélection 4 est le mode « Contrôle Continu » dit mode « CC » correspondant au module de mode de fonctionnement 14. Ce mode est utilisé lorsque la vitesse du véhicule automobile est supérieure à un certain seuil prédéterminé. Par ailleurs, il est nécessaire que le module du mode « Contrôle Continu » génère continûment sa consigne aux roues du véhicule automobile même lorsqu'il n'est pas choisi par le module de sélection 4 car la valeur de la consigne dynamique en mode « Contrôle Continu », sert de valeur de référence au module de sélection 4 auquel elle est transmise par la connexion 4c. A titre d'exemple on peut se référer au document FR-A-2827339, ce mode « Contrôle Continu » se rapporte au module d'interprétation de la volonté du conducteur, IVC. Le mode « CC » est apte à générer une consigne dynamique « Cd_CC » et une consigne statique « Cs_CC » respectivement transmises à une première entrée du sélecteur 3 par les connexions 18 et 19. Dans cette configuration où le mode « CC » est choisi, le sélecteur 3 sélectionne alors ladite première entrée en établissant une connexion 26 entre sa première entrée et sa sortie. Le sélecteur 3 peut alors délivrer les consignes statique et dynamique Cs et Cd correspondant respectivement aux consignes « Cs_CC » et « Cd_CC ».

En fonction des valeurs des paramètres d'entrée, on peut se retrouver dans une seconde configuration. Le mode choisi par le module de sélection 4 est le mode « Rampage en Couple » dit mode « RC » correspondant au module de mode de fonctionnement 15 et qui est un mode supplémentaire par rapport au document FR-A-2827339. Le mode « RC » est activé lorsque le véhicule automobile avance à petite vitesse et au ralenti avec le frein activé. Il permet de générer une consigne dynamique « Cd_RC » et une consigne statique « Cs_RC» respectivement transmises par les connexions 20 et 21 à une deuxième entrée du multiplexeur 3. En outre, la consigne dynamique Cd en cours d'application est transmise par la connexion 5a au module 15 afin d'élaborer une nouvelle consigne dynamique. Ce procédé d'élaboration sera vu plus en détail ci-après. Dans la configuration où le mode « RC » est choisi, le sélecteur 3 sélectionne ladite deuxième entrée en établissant une connexion 27 entre sa deuxième entrée et sa sortie. Le sélecteur 3 peut alors délivrer les consignes statique et dynamique Cs et Cd correspondant respectivement aux consignes « Cs_RC » et « Cd_RC ».

En fonction des valeurs des paramètres d'entrée, on peut se retrouver dans une troisième configuration. Le mode choisi par le module de sélection 4 est le mode « Rampage en Vitesse» dit mode « RV » correspondant au module de mode de fonctionnement 16 et qui est également un mode supplémentaire par rapport au document FR-A-2827339. Le mode « RV » est activé lorsque le véhicule automobile avance au ralenti mais avec le frein inactif. Il permet de générer une consigne dynamique « Cd_RV » et une consigne statique « Cs_RV» respectivement transmises par les connexions 22 et 23 à une troisième entrée du multiplexeur 3. Dans cette configuration où le mode « RV » est choisi, le sélecteur 3 sélectionne ladite troisième entrée en établissant une connexion 28 entre sa troisième entrée et sa sortie. Le sélecteur 3 peut alors délivrer les consignes statiques et dynamiques Cs et Cd correspondant respectivement aux consignes « Cs_RV » et « Cd_RV ».

En fonction des valeurs des paramètres d'entrée, on peut se retrouver dans une quatrième configuration. Le mode choisi par le module de sélection 4 est le mode « Neutre » correspondant au module de mode de fonctionnement 17 et qui est également un mode supplémentaire par rapport au document FR-A-2827339. Le mode « Neutre » est activé lorsque le levier de commande de la transmission automatisée est en position « Parking » dite « P » c'est-à-dire en position de verrouillage, ou en position « Neutre » dite « N » c'est-à-dire lorsque le véhicule automobile est en roue libre. Il permet de générer une consigne dynamique « Cd_Neutre» et une consigne statique « Cs_Neutre» respectivement transmises par les connexions 24 et 25 à une quatrième entrée du sélecteur 3. Dans cette configuration où le mode « Neutre » est choisi, le sélecteur 3 sélectionne ladite quatrième entrée en établissant une connexion 29 entre sa quatrième entrée et sa sortie. Le sélecteur 3 peut alors délivrer les consignes statique et dynamique Cs et Cd correspondant respectivement aux consignes « Cs_Neutre » et « Cd_Neutre».

Les modules de mode de fonctionnement non-sélectionnés sont capables de générer une consigne par défaut cependant selon une variante de l'invention, ils pourraient également ne générer une consigne que s'ils étaient sélectionnés, excepté le module 14 du mode « Contrôle Continu » qui doit délivrer une consigne dans tous les cas.

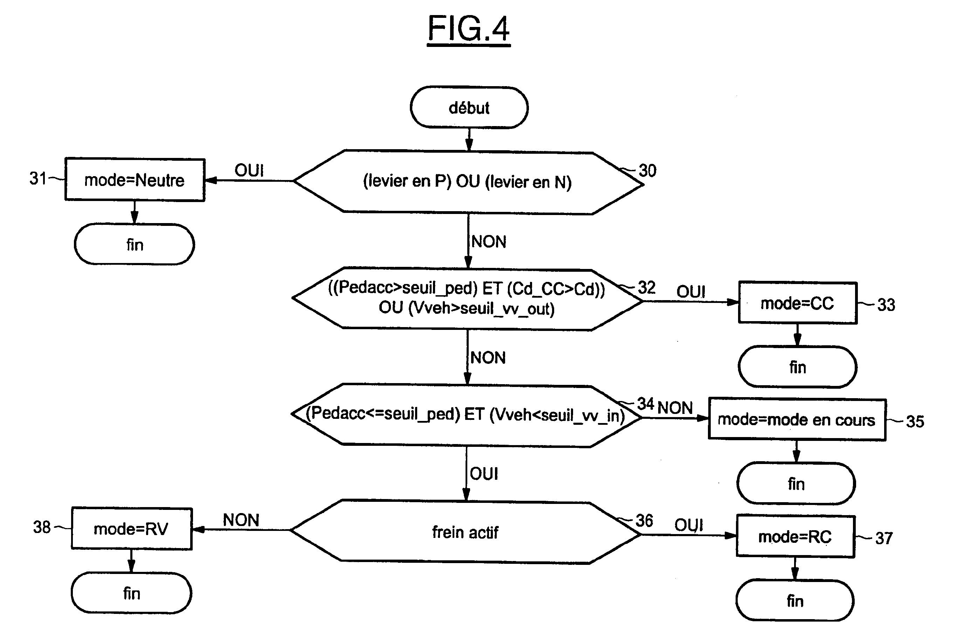

La figure 4 illustre le fonctionnement du module de sélection 4 lors du choix du mode de fonctionnement.

Tout d'abord, le module de sélection 4 adopte un mode de fonctionnement séquentiel. La remise à jour de la valeur des paramètres d'entrée est effectuée périodiquement.

L'organigramme représenté sur la figure 4, montre les différents tests d'analyse et de comparaison réalisés sur les données élaborées par le bloc d'entrée 1 et transmises par la connexion 4a. Ces tests sont réalisés par différents moyens de comparaison selon le processus suivant.

À chaque rafraîchissement, une première étape 30 consiste à vérifier l'état du levier de commande. Si celui-ci est en position dite « Parking » ou « P », ou dite « Neutre » ou « N » ((*levier en P OU levier en N*), alors on choisit le mode Neutre 31.

Si le levier de commande du véhicule automobile n'est ni dans la position « Parking » ni dans la position « Neutre », le module de sélection passe à une étape 32 et vérifie l'enfoncement de la pédale d'accélération *Pedacc,* la valeur de la composante dynamique de la consigne actuelle Cd et la vitesse du véhicule automobile *Vveh.*

Pour valider cette étape 32, soit l'enfoncement de la pédale d'accélération du véhicule automobile est strictement supérieur à un seuil prédéterminé d'enfoncement de la pédale d'accélération et, simultanément, la composante dynamique de la consigne actuelle est strictement inférieure à la composante dynamique de la consigne émise par le mode « Contrôle Continu », soit la vitesse du véhicule automobile est strictement supérieure à un premier seuil de vitesse prédéterminé ((*Pedacc>seui_ped ET Cd_CC>Cd) OU Vveh>seuil_vv_out*). Le mode choisi est alors le mode « Contrôle Continu » 33. Sinon, on passe à l'étape de test suivante 34.

Lors de l'étape 34, on teste l'enfoncement de la pédale d'accélération du véhicule automobile *Pedacc* et la vitesse du véhicule automobile *Vveh.* Si l'enfoncement de la pédale d'accélération du véhicule automobile est inférieur ou égal au seuil prédéterminé d'enfoncement de la pédale d'accélération et, simultanément, si la vitesse du véhicule automobile est strictement inférieure à un second seuil de vitesse prédéterminé (*Pedacc*<=*seuil_ped ET Vveh*<*seuil_vv_in*) alors on passe à une étape de test 36 suivante.

Si l'on ne retrouve pas ces conditions alors on conserve le mode en cours 35.

Lors de l'étape 36, on considère l'activité du frein du véhicule automobile *frein.* Si celui-ci est actif (*frein actif*), alors on choisit le mode « Rampage en Couple » 37, sinon on choisit le mode « Rampage en Vitesse » 38.

Les deux seuils de vitesse *seuil_vv_in* et *seuil_vv_out* prédéterminés et distincts permettent d'éviter les phénomènes d'hystérésis auxquels pourrait être sensible le dispositif c'est-à-dire les phénomènes d'oscillations entre deux modes de fonctionnement du fait de l'oscillation de la valeur d'un paramètre autour d'un seuil prédéterminé.

Classiquement, une courbe d'hystérésis possède deux seuils de déclenchement permettant à une variable de sortie donnée de changer de valeur. En effet, s'il existait un unique seuil de décision, la plus petite variation de la valeur de la variable d'entrée, due par exemple à du bruit, ferait osciller la variable de sortie entre les deux valeurs.

Aussi, le premier seuil de la courbe d'hystérésis permet à la variable de sortie de changer de valeur si la variable d'entrée décroît, et le second seuil si la variable d'entrée croît, la valeur du second seuil étant plus élevée que celle du premier seuil.

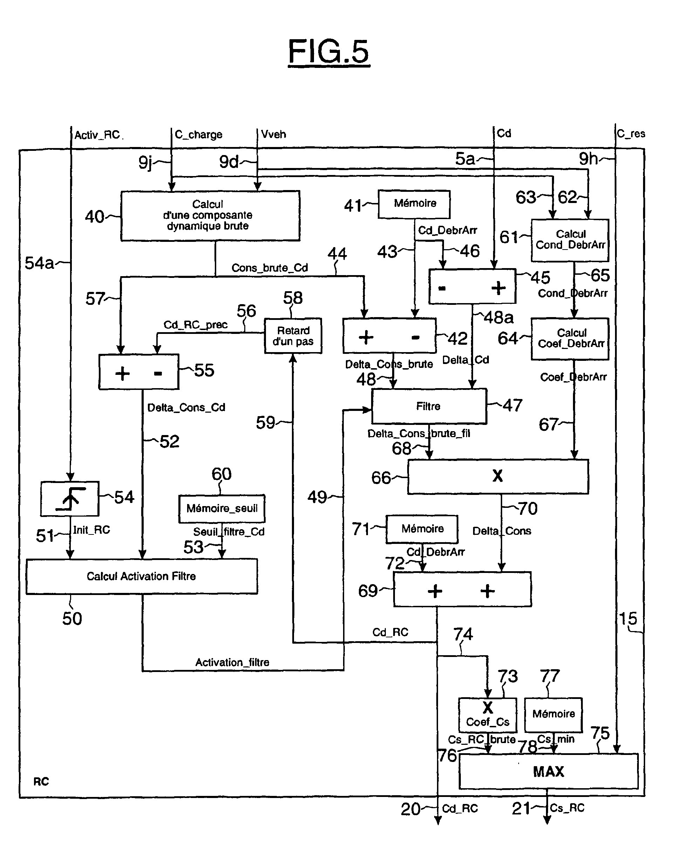

La figure 5 décrit plus particulièrement le module de mode de fonctionnement 15 correspondant au mode « Rampage en Couple » présenté sur la figure 1. Ce mode correspond à un avancement à petite vitesse et au ralenti du véhicule automobile, c'est-à-dire lorsque la vitesse du véhicule automobile est inférieure au second seuil de vitesse prédéterminé, que la pédale d'accélération est inférieure à un autre seuil prédéterminé, avec la pédale de frein activée, comme indiqué sur la figure 4.

Le mode « Rampage en Couple » comprend en outre un état de fonctionnement particulier dit « réduction de traînée à l'arrêt ». Cet état est activé lorsque le véhicule automobile est arrêté alors qu'il se trouve en mode « RC », afin de diminuer le couple moteur. De cette façon, on réduit la consommation de carburant du véhicule automobile.

Le module 15 reçoit différents paramètres d'entrée tel qu'un signal noté C_charge, représentatif de l'ensemble des couples résistants appliqués au véhicule automobile, mesurés au niveau de la roue du véhicule automobile et représentatifs de la charge embarquée par le véhicule automobile et/ou des dénivellations du profil routier. Le module 15 reçoit en outre un signal représentatif de la vitesse du véhicule automobile noté Vveh, la valeur de la consigne dynamique précédente notée Cd, et un signal noté C_res, représentatif des couples résistants appliqués à la roue et que le véhicule automobile doit vaincre pour pouvoir se mettre en mouvement.

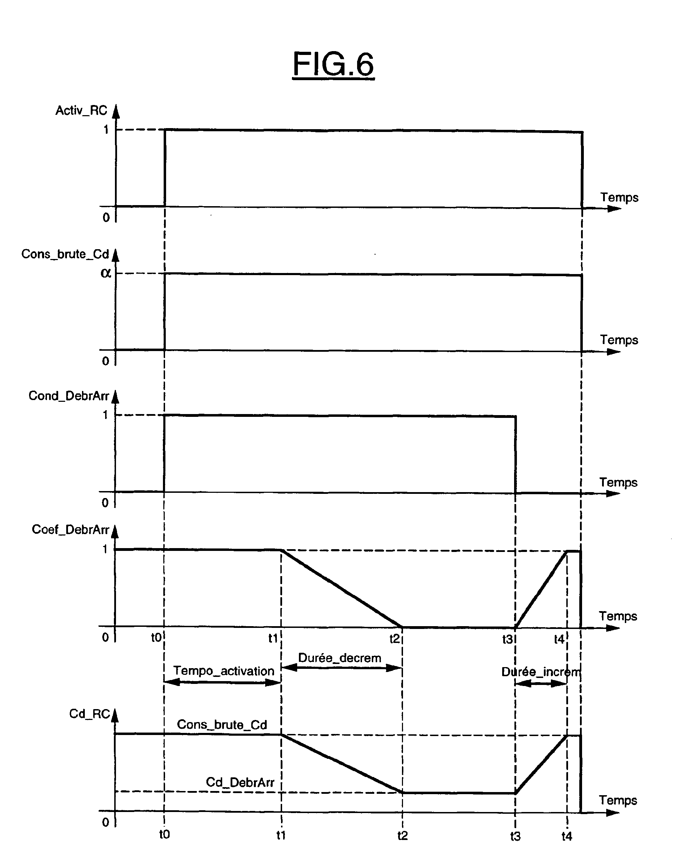

Ces différents paramètres proviennent du bloc d'entrée 1 représenté sur la figure 1. Le module 15 reçoit également en entrée un signal noté « Activ_RC » délivré par un logiciel (non représenté) ordonnateur du dispositif, « Activ_RC » prenant la valeur « 1 » lors de l'activation du mode « RC », tel que représenté sur la courbe « Activ_RC » de la figure 6.

On se réfère à nouveau à la figure 5. Le module 15 comprend un premier bloc 40 (Calcul d'une composante dynamique brute) apte à élaborer une composante dynamique brute « Cons_brute_Cd », qui permet d'adapter la composante dynamique en mode « RC » à la charge et/ou à la pente de la route. La consigne « Cons_brute_Cd » est déterminée à l'aide d'une cartographie calibrable (non représentée) du module 40, en fonction des signaux d'entrée C_charge et Vveh délivrés respectivement au module 40 par les connexions 9j et 9d. L'évolution de la consigne « Cons_brute_Cd » est représentée sur la figure 6. La consigne « Cons_brute_Cd » prend une valeur prédéterminée lorsque la variable « Activ_RC » vaut « 1 », et la valeur « 0 » sinon.

On se réfère à nouveau à la figure 5. Le module 15 comprend également des moyens de mémorisation 41 (Mémoire), apte à délivrer une consigne de cible« Cd_DebrArr » ayant une valeur calibrée en fonction du type de véhicule automobile considéré. La consigne de cible « Cd_DebrArr » représente la valeur à atteindre par la composante dynamique de couple « Cd_RC », lorsque le véhicule automobile se trouve dans l'état « réduction de traînée à l'arrêt ». Dans l'état « réduction de traînée à l'arrêt », la consigne dynamique de couple « Cd_RC » doit donc évoluer progressivement de la valeur « Cons_brute_Cd », générée par le module 40, vers la consigne de cible « Cd_DebrArr ».

Pour cela, la consigne de cible « Cd_DebrArr » est délivrée à un premier soustracteur 42 par l'intermédiaire d'une connexion 43. Le soustracteur 42 reçoit également en entrée « Cons_brute_Cd » par la connexion 44. Le soustracteur 42 a pour fonction de retrancher la valeur de la consigne de cible « Cd_DebrArr » à la consigne « Cons_brute_Cd ». Le soustracteur 42 génère en sortie une première variable intermédiaire « Delta_Cons_brute ». Cette opération permet de régler indépendamment les consigne « Cons_brute_Cd » et Cd_DebrArr » sans modifier les réglages des temporisations « Durée_decrem » et « Durée_increm » (décrites plus en détail ci-après), accélérant ainsi la phase de mise au point.

Le module 15 comprend un deuxième soustracteur 45 recevant en entrée la consigne cible « Cd_DebrArr » par une connexion 46 et la composante dynamique « Cd » de la consigne en cours d'application dans le dernier mode de fonctionnement sélectionné, délivrée par la connexion 5a. Le soustracteur 45 délivre une seconde variable intermédiaire « Delta_Cd » représentative de la composante dynamique « Cd » de la consigne en cours d'application, mais diminuée de la valeur de « Cd_DebrArr ».

Un filtre temporel 47 reçoit en entrée la consigne « Delta_Cons_brut » par une connexion 48 dans le but de filtrer cette consigne en fonction de la consigne « Delta_Cd » délivrée également en entrée par une connexion 48a. Le filtrage effectué par le filtre 47 permet de lisser le saut de la consigne antérieure « Delta_Cd » vers la nouvelle consigne « Delta_Cons_brute » et ainsi d'éviter les variations brusques de couple. Le filtre 47 délivre en sortie une variable « Delta_Cons_brute_fil », représentative de « Delta_Cons_brute », mais filtrée.

Le filtre 47 est activé par un signal de validation « Activation_filtre » délivré au filtre 47 par une connexion 49.

Le signal de validation « Activation_filtre » est délivré par un deuxième bloc 50 (Calcul Activation Filtre).

Le bloc 50 reçoit en entrée trois variables, respectivement « Init_RC » par une connexion 51, « Delta_cons_Cd » par une connexion 52 et « Seuil_filtre_Cd » par une connexion 53.

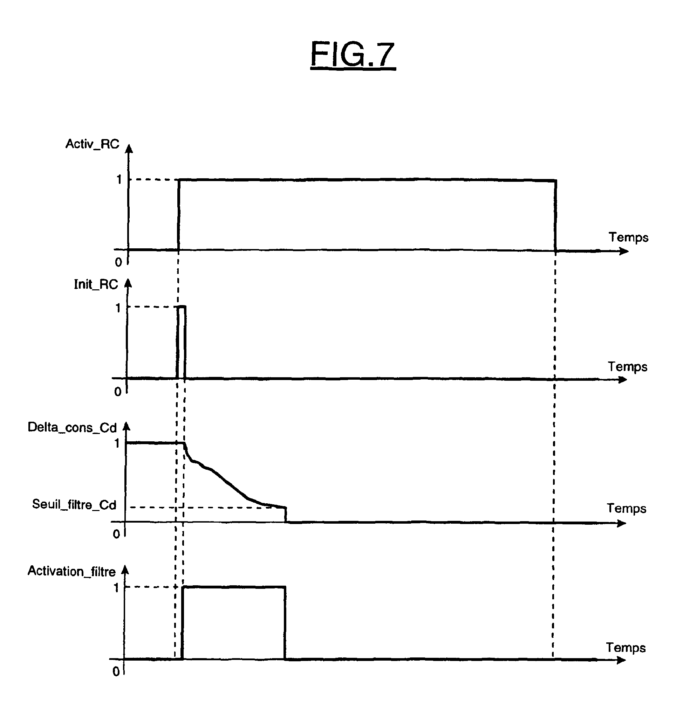

La variable « Init_RC » est un signal d'initialisation élaboré par un module 54 en fonction de la variable « Activ_RC » délivrée au module 54 par une connexion 54a. Le module 54 génère un échelon sur un pas de temps lors de l'activation du mode de fonctionnement « RC », c'est-à-dire lorsque la variable « Activ_RC » passe de la valeur « 0 » à la valeur « 1 ». À l'issue de ce pas de temps, la variable « Init_RC » reprend la valeur « 0 ». La figure 7 représente l'évolution de la variable « Init_RC » en fonction des valeurs de la variable « Activ_RC ».

On se réfère à nouveau à la figure 5. La variable « Delta_cons_Cd » est issue d'un troisième soustracteur 55. Le soustracteur 55 a pour fonction de retrancher une variable « Cd_RC_prec », transmise au soustracteur 55 par une connexion 56, à la consigne « Cons_brute_Cd » transmise au soustracteur 55 par une connexion 57.

La variable « Cd_RC_prec » est égale à la consigne « Cd_RC » mais retardée d'un pas de temps. Pour cela, le module 15 comprend un module 58 (Retard d'un pas), recevant en entrée par une connexion 59 la consigne « Cd_RC », qu'il retarde d'un pas de temps.

La valeur de la variable « Delta_cons_Cd » est comparée à une valeur de seuil « Seuil_filtre_Cd » délivrée par une cartographie mémorisée par une mémoire 60 (Mémoire_seuil).

Le module 50 peut alors délivrer le signal de validation « Activation_filtre » lorsqu'il a été activé par le signal « Init_RC » et tant que la variable « Delta_cons_Cd » est inférieure au seuil « Seuil_filtre_Cd », tel que l'on peut le voir sur les courbes « Delta_cons_Cd » et « Activation_filtre » de la figure 7. Le filtre 47 est donc activé de manière temporaire à chaque entrée dans le mode de fonctionnement « RC », où il est initialisé à la valeur « Delta_Cd » celle-ci prenant la valeur de « Cd » diminuée de « Cd_DebrArr ».

On se réfère à nouveau à la figure 5. Le module 15 comprend également un troisième bloc 61 (Calcul Cond_DebrArr). Le bloc 61 élabore une variable d'état « Cond_DebrArr » dont le rôle est d'indiquer si toutes les conditions sont réunies pour déclencher l'état « réduction de traînée à l'arrêt ». Ces conditions dépendent de la vitesse du véhicule automobile délivrée au bloc 61 par une connexion 62 et de l'ensemble des couples résistants C_charge transmis au module 61 par une connexion 63.

L'état « réduction de traînée à l'arrêt » est déclenché si la vitesse Vveh du véhicule automobile est inférieure à un premier seuil calibrable (non représenté) et si l'ensemble des couples résistants C_charge est inférieur à un second seuil calibrable (non représenté). Le deuxième seuil calibrable permet de ne pas activer l'état « réduction de traînée à l'arrêt » dans le cas de forte pente et/ou charge.

Lorsque ces conditions sont réunies le signal « Cond_Debr_Arr » prend la valeur « 1 » comme représenté sur la figure 6, par la courbe « Cond_DebrArr ».

On se réfère à nouveau à la figure 5. Un quatrième module 64 (Calcul Coef_DebrArr) élabore en fonction du signal « Cond_DebrArr », transmis par une connexion 65, un coefficient de modulation « Coef_DebrArr ».

Comme illustré sur la figure 6, le coefficient « Coef_DebrArr » est égal à « 1 » durant une première durée « Tempo_activation » à partir d'un moment t0, lorsque le signal d'état « Cond_Debr_Arr » prend la valeur « 1 ». La durée « Tempo_activation » est déterminée afin de ne pas activer immédiatement la réduction de traînée, notamment dans les situations de manoeuvres de parking.. « Tempo_activation » est calculée de manière à établir un compromis entre le confort de manoeuvre du véhicule automobile et la consommation en carburant.

À l'issue de ce temps « Tempo_activation » au moment t1, le coefficient « Coef_DebrArr » décroît régulièrement pendant une durée « Durée_decrem » de t1 jusqu'à un moment t2, sous réserve que les conditions sur Vveh et C_charge soient toujours respectées. Au moment t2, le coefficient « Coef_DebrArr » prend la valeur « 0 » et la conserve jusqu'à la fin de l'état « Réduction de traînée à l'arrêt » à l'instant t3, où « Cond_Debr_Arr » n'est plus activé et prend la valeur « 0 » où que l'on quitte le mode « RC ». Dans le cas où l'on reste dans le mode « RC », le coefficient « Coef_DebrArr » est incrémenté de nouveau pendant une durée « Durée_increm » jusqu'à ce qu'il atteigne la valeur « 1 » à l'instant t4. Les durées « Tempo_activation », « Durée_decrem » et « Durée_increm » sont calibrables en fonction du type de véhicule.

On se réfère à nouveau à la figure 5. Le coefficient de modulation « Coef_DebrArr » est transmis à un multiplieur 66 par une connexion 67. Le multiplieur 66 reçoit également en entrée la consigne filtrée « Delta_Cons_brute_fil » par une connexion 68. Le multiplieur 66 applique alors le coefficient « Coef_DebrArr » à la consigne « Delta_Cons_brute_fil ».

Le multiplieur 66 délivre alors une consigne « Delta_Cons » à un additionneur 69 par une connexion 70. L'additionneur 69 élabore la composante dynamique « Cd_RC » de la consigne en mode « RC », en ajoutant la variable « Cd_DebrArr » élaborée par une mémoire 71 (Mémoire) et délivrée à l'additionneur 69 par une connexion 72.

L'additionneur 69 délivre la composante dynamique « Cd_RC » de la consigne en mode « RC » par la connexion 20, représentée sur la figure 6 par la courbe « Cd_RC ».

Sur la figure 5, le module 15 comprend également des moyens afin d'élaborer la composante statique de la consigne « Cs_RC » en mode « RC », à partir de la consigne « Cd_RC ».

À cet effet, il comprend un bloc 73 élaborant une consigne « Cs_RC_brute » à partir de la composante dynamique de la consigne « Cd_RC » transmise par une connexion 74 au bloc 73. Le bloc 73 élabore la composante statique « Cs_RC_brute » en multipliant la consigne « Cd_RC » par un coefficient Coef_Cs, représentant une réserve souhaitée de couple applicable à la roue.

Un bloc 75 (MAX) reçoit en entrée la consigne « Cs_RC_brute » par une connexion 76, ainsi qu'une constante « Cs_min » délivrée au module 75 par une mémoire (Mémoire) 77, par l'intermédiaire d'une connexion 78. La constante « Cs_min » représente une quantité minimale de couple à appliquer à la roue. Le bloc 75 reçoit également en entrée par la connexion 9h, le signal C_res représentatif des couples résistants appliqués à la roue et positionnant le groupe moto-propulseur afin de permettre un redécollage immédiat du véhicule automobile. Le bloc 75 élabore la composante statique « Cs_RC » en prenant le maximum des trois signaux reçus en entrée.

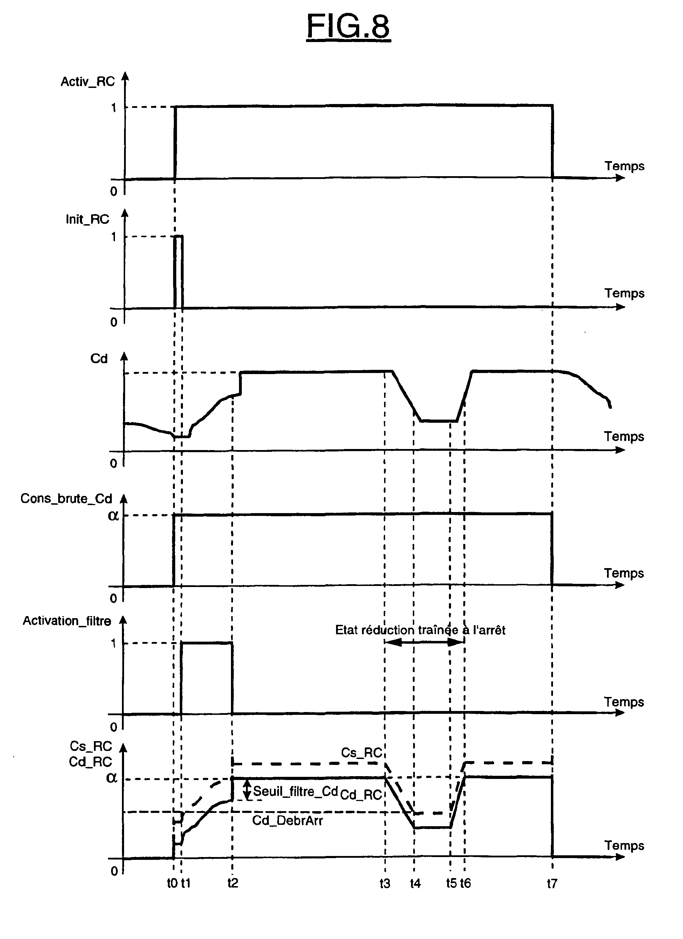

La figure 8 reprend l'évolution des consignes « Cd_RC » et « Cs_RC » du mode de fonctionnement « RC ».

À l'instant t0, la variable « Activ_RC » prend la valeur « 1 », ainsi que la variable « Init_RC », qui reprend la valeur « 0 » après un pas de temps, à l'instant t1.

À l'issue de ce pas de temps t1, le signal de validation « Activation_filtre » prend la valeur « 1 » permettant à la variable « Cd_RC » de croître progressivement, jusqu'à ce que la différence entre « Cd_RC » et la valeur de « Cons_brute_Cd » (activée en t0),α, soit inférieure à « Seuil_filtre_Cd », à l'instant t2. Le signal de validation « Activation_filtre » reprend alors la valeur « 0 ».

À l'instant t2, la variable « Cd_RC » prend la valeur de « Cons_brute_Cd » jusqu'à l'instant t3 où le véhicule automobile se trouve dans l'état de « réduction de traînée à l'arrêt ». La consigne « Cd_RC » décroît jusqu'à atteindre la valeur « Cd_DebrArr » en t4.

En t5, le véhicule automobile se trouvant toujours dans le mode « RC », la consigne « Cd_RC » quitte l'état « réduction de traînée à l'arrêt », en augmentant donc progressivement jusqu'à atteindre la valeur de « Cons_brute_Cd », c'est-à-dire α en t6.

La consigne « Cd_RC » conserve cette valeur jusqu'en t7 où l'on quitte le mode « RC » (Activ_RC=0).

L'évolution de la consigne « Cs_RC » suit celle de la consigne « Cd_RC » à un coefficient « Coef_Cs » près. On suppose dans cet exemple, qu'il n'y a pas de saturation liée à « Cs_min » ou à « Cs_res ».

L'élaboration de la composante dynamique de la consigne en mode « RC » offre plusieurs avantages. Elle permet par exemple de faire avancer le véhicule indépendamment de sa charge et/ou de la pente de la route. En outre, le véhicule automobile peut maintenir une vitesse comprise entre la vitesse nulle et la seconde vitesse de seuil *5'euil_vv_in* qui peut être de l'ordre de 6 à 10 km/h selon le type de véhicule automobile, puis atteindre une vitesse nulle, indépendamment de la charge du véhicule automobile et/ou de la pente de la route. Par ailleurs, grâce à l'état « réduction de la traînée à l'arrêt », on réduit les efforts de traînée et ainsi la consommation de carburant du véhicule automobile.

Le mode « RC » est de ce fait particulièrement adapté à des manoeuvres effectuées dans le but de garer le véhicule automobile.

## Revendications

1. Procédé de commande d'une transmission automatisée d'un groupe motopropulseur pour un véhicule automobile, comprenant une étape d'élaboration d'un signal de consigne d'une variable à appliquer aux roues du véhicule automobile, ladite consigne comprenant une composante dynamique et une composante statique élaborées en tenant compte de données d'entrée représentatives des caractéristiques du véhicule automobile, de la volonté du conducteur et de l'environnement du véhicule automobile, dans lequel on sélectionne, en fonction desdites données d'entrée, un mode parmi au moins deux modes de fonctionnement différents, capables de délivrer ledit signal de consigne, l'un des deux modes de fonctionnement correspondant à un mode dit « Rampage en Couple » apte à délivrer ledit signal de consigne lorsque le véhicule automobile avance à une vitesse inférieure à un seuil prédéterminé et que la pédale de frein du véhicule automobile est activée, **caractérisé par le fait que** le mode « Rampage en Couple » et/ou la valeur de la consigne délivrée lorsque ledit mode « Rampage en Couple » est sélectionné, sont déterminés en fonction d'un signal représentatif de la composante dynamique (Cd) de la consigne en cours d'application.

2. Procédé selon la revendication 1, **caractérisé par le fait que** le mode « Rampage en Couple » et/ou la valeur de la consigne délivrée lorsque ledit mode « Rampage en Couple » est sélectionné, sont déterminés en fonction d'un signal représentatif de l'ensemble des couples résistants (C_charge) appliqués au véhicule automobile, mesurés ou estimés au niveau de la roue du véhicule automobile et représentatifs de la charge embarquée par le véhicule automobile et/ou des dénivellations du profil routier.

3. Procédé selon la revendication 2, **caractérisé par le fait que** le mode « Rampage en Couple » et/ou la valeur de la consigne délivrée lorsque ledit mode « Rampage en Couple » est sélectionné, sont déterminés en fonction d'un signal représentatif des couples résistants (C_res) appliqués à la roue et que le véhicule automobile doit vaincre pour pouvoir se mettre en mouvement.

4. Dispositif de commande d'une transmission automatisée d'un groupe motopropulseur pour un véhicule automobile, apte à délivrer des signaux de consigne d'une variable à appliquer aux roues du véhicule automobile, ladite consigne comprenant une composante dynamique et une composante statique, élaborées en tenant compte de données d'entrée, délivrées par un bloc d'entrée et comprenant une liste de paramètres définissant les caractéristiques du véhicule automobile, la volonté du conducteur et l'environnement du véhicule automobile, **caractérisé en ce qu'**il comprend :
- un bloc de commande (2) comportait au moins deux modules selon deux modes de fonctionnement distincts et prédéterminés, l'un des modules correspondant à un mode dit « Rampage en Couple », sélectionné lorsque le véhicule automobile avance à une vitesse inférieure à un seuil prédéterminé, que la pédale d'accélération est inférieure à un autre seuil prédéterminé et que la pédale de frein du véhicule automobile est activée,
- un module de sélection (4) recevant les signaux provenant dudit bloc d'entrée (1) et apte à délivrer un signal de sélection (mode) d'un module de mode de fonctionnement en fonction des données d'entrée,
un module (16) correspondant au mode dit «Rampage en Couple » est apte à déterminer la valeur de la consigne délivrée lorsqu ledit mode «Rampage en Couple » est sélectionné, en fonction de la composante dynamique de la consigne en cours d'application.

5. Dispositif selon la revendication 4, **caractérisé par le fait que** le module destiné au mode de fonctionnement dit « Rampage en Couple » comprend :
- un premier bloc (40) apte à élaborer une composante dynamique brute (Cons_brute_Cd) de la consigne en fonction d'une liste de paramètres prédéterminée,
- un filtre temporel (47) capable de retarder la variable qu'il reçoit en entrée,
- un deuxième bloc (50) apte à élaborer une variable de validation (Activation_filtre) pour activer le filtre temporel (47), lorsqu'un signal (A,ctiv_RC) indiquant l'entrée dans le mode « Rampage en Couple » passe de la valeur « 0 » à la valeur « 1 »,
- un troisième bloc (61) apte à élaborer une variable d'état (Cond_DebrArr) indiquant si l'on se trouve dans une phase dite de « réduction de traînée à l'arrêt », en fonction de la première liste de paramètres prédéterminée,
- un quatrième bloc (64) apte à calculer un coefficient de modulation (Coef_DebrArr) à partir de la variable d'état (Cond_DebrArr), afin d'appliquer progressivement la correction apportée lors de ladite phase de « réduction de traînée à l'arrêt »,
- des moyens pour effectuer des opérations (42, 45, 55 69) sur les variables délivrées par les blocs compris dans le module (15) destiné au mode de fonctionnement dit «Rampage en Couple » en fonction d'une troisième liste de paramètres d'entrée prédéterminés,
- un moyen de retard (58) pour retarder la composante dynamique de la consigne en cours d'application,
- des moyens (60, 41, 71, 77) pour mémoriser des paramètres calibrables,
- des moyens (75) pour comparer la composante dynamique (Cd_RC), la valeur d'une composante statique brute (Cs_RC_brute) et une quantité minimale de couple applicable à la roue (Cs_min), avec un signal représentatif des couples résistants (C_res) appliqués à la roue et que le véhicule automobile doit vaincre pour pouvoir se mettre en mouvement.

6. Dispositif selon la revendication **5, caractérisé par le fait que** la liste de paramètres prédéterminés comprend la vitesse du véhicule automobile et un signal représentatif de l'ensemble des couples résistants (C_charge) appliqués au véhicule automobile, mesurés ou estimés au niveau de la roue du véhicule automobile et représentatifs de la charge embarquée par le véhicule automobile et/ou des dénivellations du profil routier.

## Claims

1. Method of controlling an automated transmission of a power train for a motor vehicle, comprising a step of formulating a setpoint signal of a variable to be applied to the wheels of the motor vehicle, said setpoint comprising a dynamic component and a static component formulated by taking account of input data representative of the characteristics of the motor vehicle, of the desire of the driver and of the environment of the motor vehicle, in which, as a function of said input data, a mode is selected from among at least two different operating modes, capable of delivering said setpoint signal, one of the two operating modes corresponding to a mode termed "Torque Creeping" able to deliver said setpoint signal when the motor vehicle advances at a speed less than a predetermined threshold and when the brake pedal of the motor vehicle is activated, **characterized in that** the "Torque Creeping" mode and/or the value of the setpoint delivered when said "Torque Creeping" mode is selected, are determined as a function of a signal representative of the dynamic component (Cd) of the setpoint undergoing application.

2. The method according to claim 1, **characterized in that** the "Torque Creeping" mode and/or the value of the setpoint delivered when said "Torque Creeping" mode is selected, are determined as a function of a signal representative of the whole set of resistive torques (C_load) applied to the motor vehicle, measured or estimated at the wheel of the motor vehicle and representative of the load carried on board by the motor vehicle and/or of the unevennesses of the road profile.

3. Method according to Claim 2, **characterized in that** the "Torque Creeping" mode and/or the value of the setpoint delivered when said "Torque Creeping" mode is selected, are determined as a function of a signal representative of the resistive torques (C_res) applied to the wheel and that the motor vehicle must overcome so as to be able to move off.

4. Device for controlling an automated transmission of a power train for a motor vehicle, able to deliver setpoint signals of a variable to be applied to the wheels of the motor vehicle, said setpoint comprising a dynamic component and a static component, formulated by taking account of input data, delivered by an input block and comprising a list of parameters defining the characteristics of the motor vehicle, the desire of the driver and the environment of the motor vehicle, **characterized in that** it comprises:
- a control block (2) comprising at least two modules according to two distinct and predetermined operating modes, one of the modules corresponding to a mode termed "Torque Creeping", selected when the motor vehicle advances at a speed less than a predetermined threshold, when the acceleration pedal is less than another predetermined threshold and when the brake pedal of the motor vehicle is activated,
- a selection module (4) receiving the signals originating from said input block (1) and able to deliver a selection signal (mode) for an operating mode module as a function of the input data,
a module (16) corresponding to the mode termed "Torque Creeping" is able to determine the value of the setpoint delivered when said "Torque Creeping" mode is selected, as a function of a signal representative of the dynamic component of the setpoint undergoing application.

5. Device according to Claim 4, **characterized in that** the module intended for the operating mode termed "Torque Creeping" comprises:
- a first block (40) able to formulate a raw dynamic component (Cons_raw_Cd) of the setpoint as a function of a predetermined list of parameters,
- a temporal filter (47) capable of delaying the variable that it receives as input,
- a second block (50) able to formulate a validation variable (Activation_filter) so as to activate the temporal filter (47), when a signal (Activ_RC) indicating entry into the "Torque Creeping" mode switches from the value "0" to the value "1",
- a third block (61 ) able to formulate a state variable (Cond_DebrArr) indicating whether we are in a phase termed of "drag reduction while stationary", as a function of the first predetermined list of parameters,
- a fourth block (64) able to calculate a modulation coefficient (Coef_DebrArr) on the basis of the state variable (Cond_DebrArr), so as progressively to apply the correction afforded during said "drag reduction while stationary" phase,
- means for performing operations (42, 45, 55, 69) on the variables delivered by the blocks included in the module (15) intended for the operating mode termed "Torque Creeping" as a function of a third list of predetermined input parameters,
- a delay means (58) for delaying the dynamic component of the setpoint undergoing application,
- means (60, 41, 71, 77) for storing calibratable parameters,
- means (75) for comparing the dynamic component (Cd_RC), the value of a raw static component (Cs_RC_raw) and a minimum torque quantity applicable to the wheel (Cs_min), with a signal representative of the resistive torques (C_res) applied to the wheel and that the motor vehicle must overcome so as to be able to move off.

6. Device according to Claim 5, **characterized in that** the list of predetermined parameters comprises the speed of the motor vehicle and a signal representative of the whole set of resistive torques (C_load) applied to the motor vehicle, measured or estimated at the wheel of the motor vehicle and representative of the load carried on board by the motor vehicle and/or of the unevennesses of the road profile.

## Patentansprüche

1. Verfahren zur Steuerung eines automatisierten Getriebes einer Antriebseinheit für ein Kraftfahrzeug, das einen Schritt der Erarbeitung eines Sollwertsignals einer an die Räder des Kraftfahrzeugs anzuwendenden Variablen enthält, wobei der Sollwert eine dynamische Komponente und eine statische Komponente enthält, die unter Berücksichtigung von Eingangsdaten erarbeitet werden, welche für Fahrzeugdaten des Kraftfahrzeugs, den Fahrerwillen und die Umgebung des Kraftfahrzeugs repräsentativ sind, bei dem in Abhängigkeit von den Eingangsdaten eine von mindestens zwei verschiedenen Betriebsarten gewählt wird, die fähig sind, das Sollwertsignal zu liefern, wobei eine der zwei Betriebsarten einem so genannten "Drehmoment-Kriechen" entspricht, das das Sollwertsignal liefern kann, wenn das Kraftfahrzeug sich mit einer Geschwindigkeit geringer als ein vorbestimmter Schwellwert fortbewegt und das Bremspedal des Kraftfahrzeugs aktiviert ist, **dadurch gekennzeichnet, dass** die Betriebsart "Drehmoment-Kriechen" und/oder die Größe des Sollwerts, der geliefert wird, wenn die Betriebsart "Drehmoment-Kriechen" gewählt wird, in Abhängigkeit von einem Signal bestimmt werden, das für die dynamische Komponente (Cd) des gerade angelegten Sollwerts repräsentativ ist.

2. Verfahren nach Anspruch 1, **dadurch gekennzeichnet, dass** die Betriebsart "Drehmoment-Kriechen" und/oder die Größe des Sollwerts, der geliefert wird, wenn die Betriebsart "Drehmoment-Kriechen" gewählt wird, in Abhängigkeit von einem Signal bestimmt werden, das für die Gesamtheit der an das Kraftfahrzeug angewendeten Widerstandsmomente (C_charge) repräsentativ ist, die in Höhe des Rads des Kraftfahrzeugs gemessen oder geschätzt werden und für die an Bord des Kraftfahrzeugs befindliche Last und/oder die Höhenunterschiede des Straßenprofils repräsentativ sind.

3. Verfahren nach Anspruch 2, **dadurch gekennzeichnet, dass** die Betriebsart "Drehmoment-Kriechen" und/oder die Größe des Sollwerts, der geliefert wird, wenn die Betriebsart "Drehmoment-Kriechen" gewählt wird, in Abhängigkeit von einem Signal bestimmt werden, das für die Widerstandsmomente (C_res) repräsentativ ist, die an das Rad angewendet werden und die das Kraftfahrzeug überwinden muss, um sich in Bewegung setzen zu können.

4. Vorrichtung zur Steuerung eines automatisierten Getriebes einer Antriebseinheit für ein Kraftfahrzeug, die Sollwertsignale einer Variablen liefern kann, die an die Räder des Kraftfahrzeugs anzuwenden ist, wobei der Sollwert eine dynamische Komponente und eine statische Komponente enthält, die unter Berücksichtigung von Eingangsdaten erarbeitet werden, die von einem Eingangsblock geliefert werden und eine Liste von Parametern enthalten, die die Fahrzeugdaten des Kraftfahrzeugs, den Fahrerwillen und die Umgebung des Fahrzeugs definieren, **dadurch gekennzeichnet, dass** sie enthält:
- einen Steuerblock (2), der mindestens zwei Module entsprechend zwei unterschiedlichen und vorbestimmten Betriebsarten aufweist, wobei eines der Module einer Betriebsart "Drehmoment-Kriechen" entspricht, die gewählt wird, wenn das Kraftfahrzeug sich mit einer Geschwindigkeit unter einem vorbestimmten Schwellwert fortbewegt, wenn das Gaspedal unter einem anderen vorbestimmten Schwellwert ist und wenn das Bremspedal des Kraftfahrzeugs aktiviert ist,
- ein Auswahlmodul (4), das die vom Eingangsblock (1) kommenden Signale empfängt und ein Auswahlsignal (mode) eines Betriebsart-Moduls in Abhängigkeit von den Eingangsdaten liefern kann,
- wobei ein der Betriebsart "Drehmoment-Kriechen" entsprechendes Modul (16) die Größe des Sollwerts, der geliefert wird, wenn die Betriebsart "Drehmoment-Kriechen" gewählt wird, in Abhängigkeit von der dynamischen Komponente des gerade angelegten Sollwerts bestimmen kann.

5. Vorrichtung nach Anspruch 4, **dadurch gekennzeichnet, dass** das für die Betriebsart "Drehmoment-Kriechen" bestimmte Modul enthält:
- einen ersten Block (40), der eine dynamische Rohkomponente (Cons_brute_Cd) des Sollwerts in Abhängigkeit von einer vorbestimmten Liste von Parametern erarbeiten kann,
- ein Zeitfilter (47), das die Variable, die es am Eingang empfängt, verzögern kann,
- einen zweiten Block (50), der eine Validierungsvariable (Activation_filtre) erarbeiten kann, um das Zeitfilter (47) zu aktivieren, wenn ein Signal (Activ_RC), das den Eintritt in die Betriebsart "Drehmoment-Kriechen" anzeigt, vom Wert "0" zum Wert "1" übergeht,
- einen dritten Block (61), der in Abhängigkeit von der ersten vorbestimmten Liste von Parametern eine Zustandsvariable (Cond_DebrArr) erarbeiten kann, die anzeigt, ob man sich in einer so genannten Phase der "Fahrwiderstandsreduzierung im Stillstand" befindet,
- einen vierten Block (64), der einen Modulationskoeffizient (Coef_DebrArr) ausgehend von der Zustandsvariablen (Cond_DebrArr) berechnen kann, um progressiv die in der Phase der "Fahrwiderstandsreduzierung im Stillstand" hinzugefügte Korrektur anzuwenden,
- Einrichtungen, um Vorgänge (42, 45, 55, 69) an den von den in dem für die Betriebsart "Drehmoment-Kriechen" bestimmten Modul (15) enthaltenen Blöcken gelieferten Variablen in Abhängigkeit von einer dritten Liste von vorbestimmten Parametern durchzuführen,
- eine Verzögerungseinrichtung (58), um die dynamische Komponente des gerade angelegten Sollwerts zu verzögern,
- Einrichtungen (60, 41, 71, 77), um kalibrierbare Parameter zu speichern,
- Einrichtungen (75), um die dynamische Komponente (Cd_RC), den Wert einer statischen Rohkomponente (Cs_RC_brute) und eine an das Rad anwendbare Mindestmomentmenge (Cs_min) mit einem Signal zu vergleichen, das für die Widerstandsmomente (C_res) repräsentativ ist, die an das Rad angelegt werden und die das Kraftfahrzeug überwinden muss, um sich in Bewegung setzen zu können.

6. Vorrichtung nach Anspruch 5, **dadurch gekennzeichnet, dass** die Liste von vorbestimmten Parametern die Geschwindigkeit des Kraftfahrzeugs und ein für die Gesamtheit der an das Kraftfahrzeug angewendeten Widerstandsmomente (C_charge) repräsentatives Signal enthält, die in Höhe des Rads des Kraftfahrzeugs gemessen oder geschätzt werden und für die an Bord des Kraftfahrzeugs befindliche Last und/oder die Höhenunterschiede des Straßenprofils repräsentativ sind.
